# EUROPÄISCHE PATENTSCHRIFT

(11) **EP 1 243 170 B1**
(45) Veröffentlichungstag und Bekanntmachung des Hinweises auf die Patenterteilung: **09.08.2006**
(21) Anmeldenummer: 02006041.4
(22) Anmeldetag: 16.03.2002
(51) Int. Cl.: A01B 63/10, A01B 59/06

(54) **Geräteschnittstelle zwischen Arbeitsfahrzeug und Gerät**
Implement working vehicle interface
Interface entre véhicule de travail et outil

(30) Priorität: 22.03.2001 DE 10114092
(43) Veröffentlichungstag der Anmeldung: 25.09.2002
(73) Patentinhaber: DEERE & COMPANY, Moline, Illinois 61265-8098 (US)
(72) Erfinder: Bernhardt, Gerd, Prof. Dr. Ing. habil, 01728 Hänichen (DE); Fedotov, Sergiy, 01069 Dresden (DE); Rudik, Ruslan, 01069 Dresden (DE); Weiss, Heinz, 64625 Bensheim (DE)
(74) Vertreter: Lau-Loskill, Philipp

(56) Entgegenhaltungen:
- DE-A- 19 939 967
- US-A- 4 237 688
- US-A- 4 335 561
- US-A- 4 949 540

## Beschreibung

Die Erfindung betrifft eine Geräteschnittstelle zur Kopplung von Arbeitsgeräten an ein Arbeitsfahrzeug bei der wenigstens zwei Hydraulikzylinder vorgesehen sind, durch die sich die relative Lage zwischen dem Arbeitsgerät und dem Arbeitsfahrzeug einstellen lässt.

Landwirtschaftliche oder industrielle Arbeitsmaschinen enthalten häufig Vorrichtungen zur Aufnahme von Arbeitsgeräten. So weist beispielsweise ein konventioneller Ackerschlepper im Heckbereich eine Dreipunktanbauvorrichtung auf, die im wesentlichen zwei Unterlenker und einen Oberlenker enthält, deren freie Enden mit Fanghaken oder anderen Befestigungsmitteln zur Befestigung von Anbaugeräten ausgestattet sind. Üblicherweise ist jeder der beiden Unterlenker über sogenannte Hubstreben mit einer gemeinsamen Hubwelle verbunden, welche sich hydraulisch verdrehen lässt. Damit ergibt sich eine starre mechanische Verbindung zwischen den beiden Unterlenkern und ein erzwungener Gleichlauf der Unterlenker.

Es ist auch bekannt (DE 199 39 967 A1), an Stelle der Hubstreben und der Hubwelle, für jeden Unterlenker einen Hubzylinder vorzusehen, durch den sich die Unterlenker individuell anheben und absenken lassen. Bei diesen Anordnungen, die insbesondere bei Frontkrafthebern verwendet werden, wird der Gleichlauf der beiden Unterlenker durch eine aktive Ansteuerung der Hydraulikzylinder gewährleistet. Dies erfordert zusätzlichen Energieaufwand und eine entsprechende Steuereinrichtung.

Aus der US 4,335,561 ist eine Geräteschnittstelle für ein Baumwoll-Erntegerät gemäß den Merkmalen des Oberbegriffs des Patentanspruchs 1 bekannt.

Die der Erfindung zugrunde liegende Aufgabe wird darin gesehen, eine Geräteschnittstelle der eingangs genannten Art anzugeben, die ohne den Einsatz zusätzlicher Energiequellen und ohne zusätzliche Steuereinrichtungen einen Gleichlauf der Hydraulikzylinder ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Geräteschnittstelle dient der Kopplung von Arbeitsgeräten an ein Arbeitsfahrzeug. Sie enthält wenigstens zwei Hydraulikzylinder, durch die sich die relative Lage zwischen dem gekoppelten Arbeitsgerät und dem Arbeitsfahrzeug einstellen lässt. Die beiden Hydraulikzylinder stehen mit wenigstens einem Zahnradstromteiler derart in Verbindung, dass ein Gleichlauf der Zylinder ohne zusätzlichen Energieaufwand lediglich unter der Wirkung der auf die Hydraulikzylinder wirkenden äußeren Kräfte erfolgt. Es ergibt sich somit eine Rückwirkung, durch die auf die äußeren, auf die Hydraulikzylinder wirkenden Kräfte reagiert wird, ohne dass eine aktive Beeinflussung durch eine Energiequelle erforderlich ist.

Dies ermöglicht den Gleichlauf der beiden Hydraulikzylinder für den Fall einer gleichmäßigen Schwimmstellung, wenn also die Hydraulikzylinder nicht an eine Druckquelle angeschlossen sind, durch die sich die Lage des Arbeitsgerätes verändern lässt. Die Schwimmstellung kann beispielsweise für eine Bodenbearbeitung eingestellt werden, um eine gewünschte Ausrichtung des Arbeitsgeräts beizubehalten.

Als Anbaugerät kann beispielsweise ein Pflug verwendet werden, der mittels einer erfindungsgemäßen Geräteschnittstelle mit einem Ackerschlepper verbunden ist, so dass das Pflügen in der Schwimmstellung ermöglicht wird. Für andere Anforderungen an das Bearbeitungsergebnis kann anstelle des erfindungsgemäßen Schwimmstellungsbetriebs natürlich auch eine übliche Tiefenregelung eingesetzt werden, wobei die Hubzylinder von dem wenigstens einen Zahnradstromteiler getrennt und mit einer Tiefenregelungseinrichtung verbunden werden.

Durch die erfindungsgemäße Lösung wird der Gleichlauf der Hydraulikzylinder in der Schwimmstellung ohne mechanische Verbindungen (insbesondere ohne eine gemeinsame Hubwelle oder andere mechanische Verbindungsmittel zwischen den Koppelelementen) realisiert. Es ist auch keine Hydraulikpumpe zur Aufrechterhaltung der Schwimmstellung erforderlich, so dass eine Fremdenergiezufuhr entbehrlich ist. Fehler, die durch eine aktive Ansteuerung der Hubzylinder auftreten können, lassen sich vermeiden. Das erfindungsgemäße System wird in der Schwimmstellung lediglich durch den Einfluss äußerer Kräfte, die auf die Hydraulikzylinder wirken, angetrieben.

Grundsätzlich ist es möglich, lediglich die kolbenseitigen Räume bzw. lediglich die ringseitigen Räume der beiden Hydraulikzylinder mit dem Zahnradstromteiler zu verbinden. Eine besonders zuverlässige Arbeitsweise ergibt sich jedoch dann, wenn die Hydraulikzylinder als doppeltwirkende Hydraulikzylinder ausgelegt sind und jeder der beiden kolbenseitigen Räume sowie jeder der beiden ringseitigen Räume der Hydraulikzylinder mit einem Rotor des wenigstens einen Zahnradstromteilers verbunden ist.

Eine weitere bevorzugte Ausgestaltung der Erfindung sieht vor, dass der Zahnradstromteiler wenigstens zwei auf einer gemeinsamen Welle angeordnete Rotoren enthält. Bei den Rotoren handelt es sich um Zahnradpaare, die als Pumpen/Motor-Einheit ausgebildet sind. Jeder Rotor ist einerseits mit dem Kolbenraum (kolbenseitiger Raum) eines der beiden Hydraulikzylinder und andererseits mit einem Vorratsbehälter verbunden. Als Vorratsbehälter dient beispielsweise ein Flüssigkeitsbehälter für die Arbeitshydraulik des Arbeitsfahrzeugs.

Alternativ oder ergänzend hierzu ist es auch von Vorteil, dass der Zahnradstromteiler wenigstens zwei auf einer gemeinsamen Welle angeordnete Rotoren enthält, die jeweils einerseits mit dem Ringraum (ringseitiger Raum) eines der beiden Hydraulikzylinder und andererseits mit einem Vorratsbehälter in Verbindung stehen.

Eine besonders vorteilhafte Ausgestaltung der Erfindung ist dadurch gegeben, dass der Zahnradstromteiler vier auf einer gemeinsamen Welle angeordnete Rotoren enthält. Zwei dieser Rotoren, die ein größeres Schluckvolumen aufweisen, stehen jeweils mit dem Kolbenraum eines der beiden Hydraulikzylinder in Verbindung und zwei der Rotoren, die ein kleineres Schluckvolumen aufweisen, stehen jeweils mit dem Ringraum eines der beiden Hydraulikzylinder in Verbindung. Alle Rotoren stehen andererseits mit einem Vorratsbehälter in Verbindung.

Eine weitere bevorzugte Ausgestaltung der Erfindung sieht vor, dass der Zahnradstromteiler wenigstens zwei auf einer gemeinsamen Welle angeordnete Rotoren enthält, von denen ein erster Rotor mit dem Kolbenraum eines ersten Hydraulikzylinders und ein zweiter Rotor mit dem Ringraum eines zweiten Hydraulikzylinders und beide Rotoren andererseits mit einem Vorratsbehälter in Verbindung stehen.

Insbesondere können zwei Zahnradstromteiler vorgesehen sein, wobei ein erster Zahnradstromteiler zwei auf einer gemeinsamen ersten Welle angeordnete Rotoren enthält, von denen ein erster Rotor mit dem Kolbenraum eines ersten Hydraulikzylinders und ein zweiter Rotor mit dem Ringraum eines zweiten Hydraulikzylinders in Verbindung steht. Ein zweiter Zahnradstromteiler enthält ebenfalls zwei auf einer zweiten gemeinsamen Welle angeordnete Rotoren, von denen ein erster Rotor mit dem Ringraum des ersten Hydraulikzylinders und ein zweiter Rotor mit dem Kolbenraum des zweiten Hydraulikzylinders in Verbindung steht. Alle Rotoren stehen andererseits mit einem Vorratsbehälter in Verbindung.

Zweckmäßigerweise werden die Schluckvolumen der Rotoren auf den jeweils zugehörigen Hydraulikzylinderraum abgestimmt. Stehen beispielsweise die beiden Kolbenräume eines doppeltwirkenden Hydraulikzylinders mit einem Zahnradstromteiler, der zwei Rotoren enthält, in Verbindung, so ist der Gleichlauf der Hydraulikzylinder dann gewährleistet, wenn das Schluckvolumen des ersten Rotors proportional zur wirksamen Kolbenfläche des zugehörigen ersten Zylinderraums ist und gleichzeitig das Schluckvolumen des zweiten Rotors proportional zu der wirksamen Kolbenfläche des zugehörigen zweiten Zylinderraums ist.

Da es aus Fertigungsgründen schwierig sein kann, die Volumina korrekt aufeinander abzustimmen, können während der Schwimmstellung Unterdrücke im System auftreten. Diese können den Wirkungsgrad und die Eigenschaften der Hydraulikflüssigkeit ungünstig beeinflussen und zu Kavitationen im System führen. Es ist daher für einen zuverlässigen Betrieb von Vorteil, Rückschlagventile vorzusehen, die einen Flüssigkeitsfluss vom Vorratsbehälter zu den Hydraulikzylindern ermöglichen, sofern der Druck in einen Hydraulikzylinderraum unter einen vorgebbaren Druck fällt.

Die erfindungsgemäße Geräteschnittstelle wird bevorzugt bei Dreipunkt-Anbauvorrichtungen verwendet, bei denen die beiden Unterlenker nicht über Hubstreben mit einer Hubwelle verbunden sind, sondern sich durch jeweils einen als Hubzylinder ausgebildeten Hydraulikzylinder anheben und absenken lassen. Zur Einstellung der Schwimmstellung werden die Hydraulikzylinder von der Druckversorgung, die dem Anheben und Absenken der Hydraulikzylinder dient, getrennt und mit einem oder mehreren Stromteilern verbunden, die den gewünschten Gleichlauf ermöglichen. Die Anbauvorrichtung kann beispielsweise im Fahrzeugheck angeordnet sein.

Insbesondere kann die erfindungsgemäße Geräteschnittstelle auch bei einem Frontkraftheber verwendet werden. Dies ergibt erhebliche Vorteile gegenüber bisherigen Lösungen, bei denen die beiden Unterlenker des Frontkrafthebers miteinander starr verbunden wurden, um einen Gleichlauf zu erreichen. Dabei war jedoch eine Schrägstellung, bei der die beiden Querelemente unterschiedliche Höhenlagen einnehmen, nicht möglich.

Ein besonders bevorzugtes Anwendungsgebiet für die erfindungsgemäße Geräteschnittstelle ist dort gegeben, wo die Anbauschnittstelle durch Hydraulikzylinder gebildet wird, die nach Art eines Hexapoden angeordnete sind. Derartige Anbauschnittstellen sind in der nachveröffentlichten deutschen Patentanmeldung DE 199 51 840.8 beschrieben, auf deren Offenbarung hiermit ausdrücklich Bezug genommen wird. Dabei stehen wenigstens zwei der sechs Hydraulikzylinder des Hexapod mit wenigstens einem Zahnradstromteiler in der oben beschriebenen Weise in Verbindung. Vorzugsweise werden die beiden Hydraulikzylinder des Hexapoden, die eine ausgeprägte vertikale Ausrichtung aufweisen und daher die Hauptlast der vertikalen Kräfte aufnehmen, mit einem oder mit zwei Zahnradstromteiler verbunden.

Um das Anbaugerät aktiv in eine gewünschte Lage bringen zu können, sieht eine zweckmäßige Weiterbildung der Erfindung vor, dass die kolbenseitigen und/oder ringseitigen Räume der Hydraulikzylinder über eine Ventilanordnung mit einer Druckquelle in Verbindung stehen. Durch die Ventilanordnung kann einerseits zwischen einer Schwimmstellung, in der die Zahnradstromteiler wirksam sind, und einer Arbeitsstellung, in der die Hydraulikzylinder an eine Hydraulikdruckquelle anschließbar sind, umgeschaltet werden. Andererseits dient die Ventilanordnung bei der Arbeitsstellung der Einstellung und Dosierung des Hydraulikzuflusses und Hydraulikabflusses zu und von den Hydraulikzylindern. Die Ventilanordnung wird vorzugsweise auch dazu verwendet, um einen Neigungswinkel des Arbeitsgerätes einzustellen, der dann bei Umschaltung in die Schwimmstellung beibehalten wird.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine erste erfindungsgemäße Geräteschnittstelle mit zwei Unterlenkern und einem Oberlenker,
- Fig. 2: eine zweite erfindungsgemäße Geräteschnittstelle mit Hydraulikzylindern in Hexapod-Anordnung,
- Fig. 3: ein Hydraulikschaltkreis für eine erfindungsgemäße Geräteschnittstelle und
- Fig. 4: ein alternativer Hydraulikkreis für eine erfindungsgemäße Geräteschnittstelle.

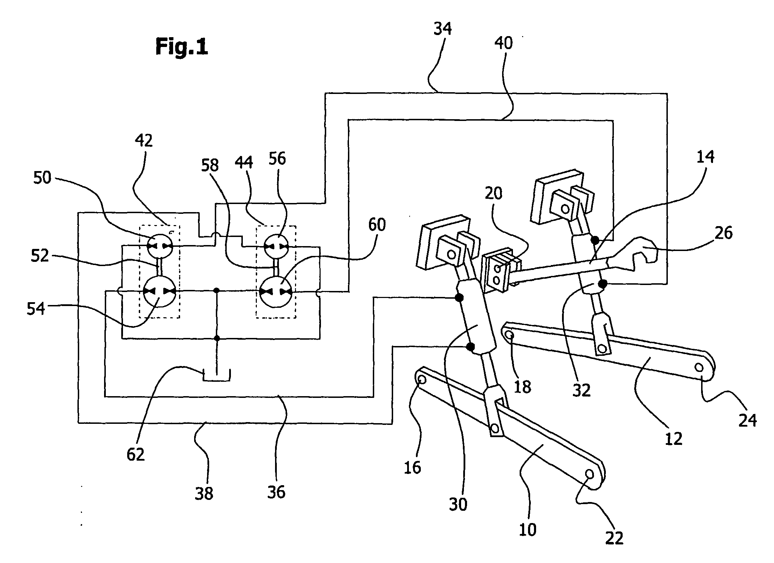

Aus der Fig. 1 gehen zwei Unterlenker 10, 12 und ein Oberlenker 14 einer Anbauvorrichtung hervor, die mit jeweils einem Ende 16, 18, 20 an einem nicht näher dargestellten Ackerschlepper angelenkt sind und deren freie Enden je eine übliche Aufnahme 22, 24 bzw. einen Fanghaken 26 zur Befestigung eines nicht dargestellten Anbaugerätes tragen. In den Oberlenker 14 ist ein nicht näher dargestellter hydraulisch betätigbarer Oberlenkerzylinder integriert, durch den sich die Länge des Oberlenkers 14 einstellen lässt, so dass sich das Anbaugerät um eine quer zur Fahrzeugausrichtung verlaufende im wesentlichen horizontale Achse verschwenken lässt. Die Unterlenker 10, 12 lassen sich durch je einen Hydraulikzylinder 30, 32, deren jeweils erstes Ende am zugehörigen Unterlenker 10, 12 und deren jeweils zweites Ende am Fahrzeugrumpf angelenkt ist, um ihre fahrzeugseitigen Anlenkstellen 16, 18 in vertikaler Richtung verschwenken.

Die Unterlenkerhydraulikzylinder 30, 32 sind doppeltwirkende Hydraulikzylinder, deren kolbenseitige Räume und ringseitige Räume über Hydraulikschläuche 34, 36, 38, 40 mit einem ersten und einem zweiten Zahnradstromteiler 42, 44 verbunden sind. Der erste Zahnradstromteiler 42 enthält einen ersten Rotor 50, der über eine erste Welle 52 mit einem zweiten Rotor 54 drehfest verbunden ist. Auf entsprechende Weise einhält der zweite Zahnradstromteiler 44 einen dritten Rotor 56, der über eine zweite Welle 58 mit einem vierten Rotor 60 drehfest verbunden ist. Bei den Rotoren 50, 54, 56, 60 handelt es sich jeweils um Zahnradpaare, die als Pumpen/Motor-Einheit ausgebildet sind. Wird einer der beiden Rotor eines Zahnradstromteilers durch einen in seinem zugehörigen Hydraulikkreis herrschenden Hydraulikdruck angetrieben (Motor), so überträgt er über die Welle ein Drehmoment auf den anderen Rotor, welcher als Pumpe wirkt und in seinem zugehörigen Hydraulikkreis einen Hydraulikdruck aufbaut. Sind die Druckverhältnisse in den Hydraulikkreisen umgekehrt, so wirken die beiden Rotoren in umgekehrter Weise.

Durch einen ersten Hydraulikschlauch 34 ist der Ringraum eines zweiten Hydraulikzylinders 32 mit einem ersten Anschluss des ersten Rotors 50 des ersten Zahnradstromteilers 42 verbunden. Durch einen zweiten Hydraulikschlauch 36 ist der Kolbenraum eines ersten Hydraulikzylinders 30 mit einem ersten Anschluss des zweiten Rotors 54 des ersten Zahnradstromteilers 42 verbunden. Durch einen dritten Hydraulikschlauch 38 ist der Ringraum des ersten Hydraulikzylinders 30 mit einem ersten Anschluss des dritten Rotors 56 des zweiten Zahnradstromteilers 44 verbunden. Durch einen vierten Hydraulikschlauch 40 ist der Kolbenraum des zweiten Hydraulikzylinders 32 mit einem ersten Anschluss des vierten Rotors 60 des zweiten Zahnradstromteilers 44 verbunden. Die jeweils zweiten Anschlüsse der Rotoren 50, 54, 56, 60 stehen mit einem Vorratsbehälter 62 in Verbindung.

Die Volumen der Rotoren 50, 54, 56, 60 sind auf die zugehörigen Kolbenräume bzw. Ringräume der Hydraulikzylinder 30, 32 angepasst. Die den beiden Ringräumen zugeordneten Rotoren 50, 56 haben ein kleineres Volumen als die den Kolbenräumen zugeordneten Rotoren 54, 60, weil die Kolbenräume einen größeren Querschnitt aufweisen als die Ringräume.

Die Wirkungsweise der in Fig. 1 dargestellten Anordnung ist folgende:

Wird beispielsweise der erste Unterlenker durch eine Belastungssteigerung angehoben, so drückt sein Kolbenraum Hydraulikflüssigkeit in den zweiten Rotor 54 des ersten Zahnradstromteilers 42. Der zweite Rotor 54 treibt den ersten Rotor 50 an, welcher Hydraulikflüssigkeit in den Ringraum des zweiten Hydraulikzylinders 32 drückt, so dass dieser nachgibt und den zweiten Unterlenker 12 nach oben auslenkt. Das bedeutet, das beide Unterlenker 10, 12 in gleicher Weise auf eine Belastungssteigerung reagieren, in dem sie nach oben nachgeben bis sich wieder eine stabile Lage einstellt. Im beschriebenen Beispiel wird der zweite Unterlenker 12 entsprechend der Belastungssteigerung am ersten Unterlenker 10 entlastet. Zur Unterstützung dieser Wirkungsweise wird in entsprechender Weise bei einer Belastungssteigerung im ersten Unterlenker 10 der Ringraum des ersten Hydraulikzylinders 30 entlastet und der Kolbenraum des zweiten Hydraulikzylinders 32 belastet, was durch den zweiten Zahnradstromteiler ausgeglichen wird. Beide Zahnradstromteiler 42, 44 steuern den Zufluss zu den Hydraulikzylindern 30, 32 als auch den Abfluss von den Hydraulikzylindern 30, 32.

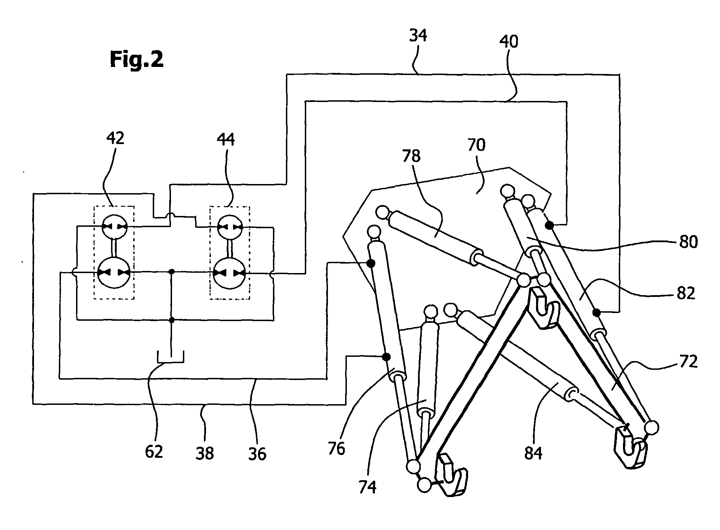

Die Fig. 2 zeigt eine Anbauschnittstelle, bei der zwischen dem schematisch dargestellten Fahrzeugrumpf 70 und einem im wesentlichen V-förmigen, nach unten offenen Koppelrahmen 72 sechs Hydraulikzylinder 74, 76, 78, 80, 82, 84 nach Art eines Hexapoden angeordnet sind. Hexapod-Anordnungen für Geräteschnittstellen wurden bereits durch die nachveröffentlichte deutsche Patentanmeldung DE 199 51 840.8 beschrieben, auf die hiermit zur Vermeidung von Wiederholungen Bezug genommen wird.

Die fahrzeugseitigen Anlenkstellen der Hydraulikzylinder 74, 76, 78, 80, 82, 84 befinden sich im wesentlichen in den Eckpunkten eines auf einer seiner Spitze stehenden Dreiecks, während sich die rahmenseitigen Anlenkstellen der Hydraulikzylinder 74, 76, 78, 80, 82, 84 im wesentlichen in den Eckpunkten eines Dreiecks befinden, dessen eine Seitenlinie in der Grundstellung in etwa horizontal ausgerichtet ist, während der dieser Seitenlinie gegenüberliegende Eckpunkt oben liegt.

Während die Hydraulikzylinder 74, 78, 80 und 84 in erster Näherung in horizontalen Ebenen liegen, verlaufen die beiden Hydraulikzylinder 76 und 82 ausgehend vom Fahrzeugrumpf 70 nach hinten und schräg nach unten. Diese beiden Hydraulikzylinder 76, 82 nehmen im wesentlichen die an dem Koppelrahmen 72 auftretenden vertikalen Kräfte auf. Sie sind als doppeltwirkende Hydraulikzylinder ausgebildet und stehen auf eine Weise mit zwei Zahnradstromteilern 42, 44 in Verbindung, die der in Fig. 1 gezeigten Anordnung entspricht, so dass im Zusammenhang mit der Fig. 2 auf eine erneute detaillierte Beschreibung des hydraulischen Kreises und dessen Wirkungsweise verzichtet werden kann.

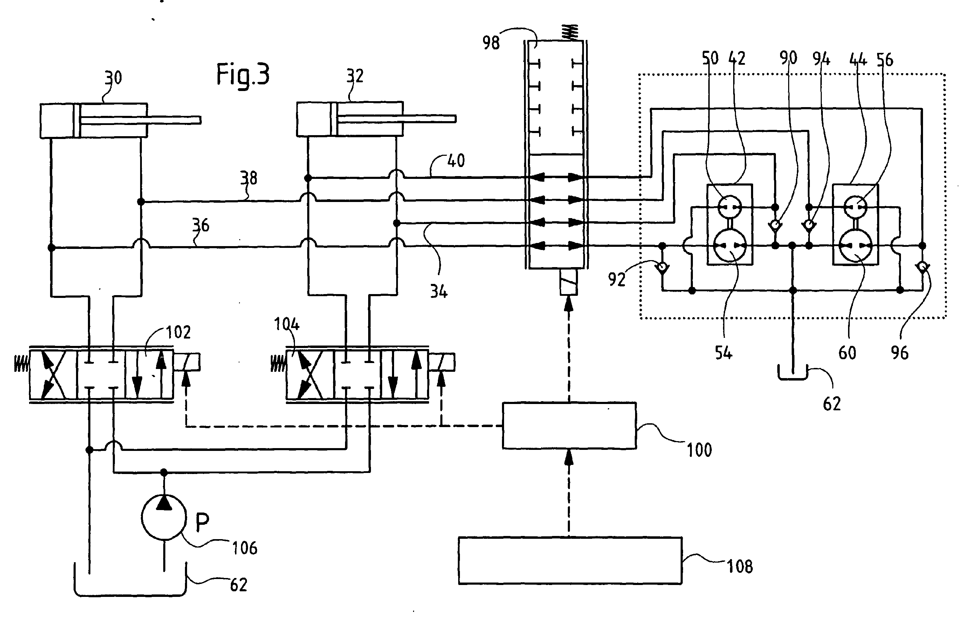

Aus Fig. 3 gehen Einzelheiten eines Hydraulikkreises hervor, wie er im Zusammenhang mit der Anordnung aus Fig. 1 oder Fig. 2 verwendet werden kann. Die anhand der Fig. 3 verwendeten Bezugsziffern lehnen sich an die Bezugsziffern der Fig. 1 an.

Die beiden in Fig. 3 dargestellten Zahnradstromteiler 42, 44 sind durch Rückschlagventile 90, 92, 94, 96 beschaltet. Zwischen jedem der vier Hydraulikschläuche 34, 36, 38, 40 und dem Vorratsbehälter 62 ist ein Rückschlagventil 90, 92, 94, 96 angeordnet. Die Rückschlagventile 90, 92, 94, 96 öffnen bei einer vorgebbaren Druckdifferenz zwischen den Hydraulikleitungen 34, 36, 38, 40 und dem Vorratsbehälter 62, um bei Unterdruck einen Flüssigkeitsstrom von dem Vorratsbehälter 62 in die entsprechende Hydraulikleitung 34, 36, 38, 40 zuzulassen. Hierdurch werden Unterdrücke in den Hydraulikzylindern 30, 32 und den Zahnradstromteilern 42, 44 und die damit verbunden Nachteile vermieden.

Zwischen den beiden Hydraulikzylindern 30, 32 und den Zahnradstromteilern 42, 44 befindet sich ein Absperrventil 98, durch welches sich alle vier Hydraulikleitungen 34, 36, 38, 40 unterbrechen lassen. Bei dem Absperrventil 98 handelt es sich um ein in seine Sperrstellung federvorgespanntes elektromagnetisch betätigbares Ventil, welches durch eine Steuereinheit 100 ansteuerbar ist.

Der Kolbenraum und der Ringraum jedes der beiden Hydraulikzylinder 30, 32 steht über ein zugehöriges Umschaltventil 102, 104 mit einer Hydraulikpumpe 106 und einem Vorratsbehälter 62 in Verbindung. Die beiden Umschaltventile 102, 104 sind 4/3-Wegeventile (4 Wege, 3 Positionen) und lassen sich elektromagnetisch durch die Steuereinheit 100 ansteuern. Sie lassen sich aus der dargestellten Sperrstellung in eine erste Auslenkstellung bringen, in der der Kolbenraum des entsprechenden Hydraulikzylinders 30, 32 mit Druck beaufschlagt und der Ringraum entlastet wird, so dass sich der zugehörige Hydraulikzylinder 30, 32 ausdehnt. In einer zweiten Stellung des Umschaltventils 102, 104 wird der Ringraum des entsprechenden Hydraulikzylinders 30, 32 mit Druck beaufschlagt und der Kolbenraum entlastet, so dass sich der Hydraulikzylinder 30, 32 zusammenzieht.

Es ist eine von Hand betätigbare Eingabevorrichtung 108 vorgesehen, durch die entsprechende Befehle an die Steuereinheit 100 abgegeben werden können, um entweder mittels der Umschaltventile 102, 104 die Hydraulikzylinder 30, 32 anzusteuern oder um die sogenannte Schwimmstellung zu wählen, in der die Umschaltventile 102, 104 geschlossen sind und das Absperrventil 98 offen ist (wie dargestellt), um einen Gleichlauf der beiden Hydraulikzylinder 30, 32 zu ermöglichen.

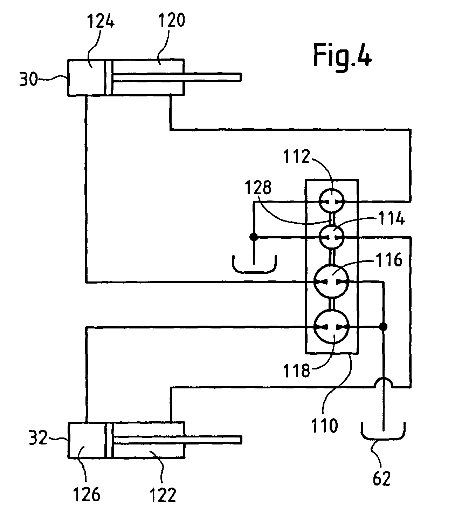

Aus Fig. 4 geht ein alternativer Zahnradstromteiler 110 hervor. Dieser enthält vier Rotoren 112, 114, 116, 118. Die beiden kleineren Rotoren 112, 114 stehen mit den Ringräumen 120, 122 der beiden Hydraulikzylinder 30, 32 in Verbindung, und die größeren Rotoren 116, 118 stehen mit den Kolbenräumen 124, 126 der beiden Hydraulikzylinder 30, 32 in Verbindung.

Wird beispielsweise der erste Hydraulikzylinder 30 durch eine auf ihm lastende äußere Kraft zusammengedrückt, so erhöht sich der Druck in seinem Kolbenraum 124. Dieser Druck treibt den Rotor 116 an. Die gleichzeitig auftretende Druckreduzierung im Ringraum 120 des ersten Hydraulikzylinders 30 treibt in gleichem Drehsinn den Rotor 112 an. Diese Rotoren 116, 112 wirken als Motor, die über die Welle 128, welche alle vier Rotoren 112, 114, 116, 118 drehfest verbindet, die beiden als Pumpe wirkenden Rotoren 114, 118 antreiben, so dass Hydraulikflüssigkeit aus dem Kolbenraum 126 des zweiten Hydraulikzylinders 32 abfließt und Hydraulikflüssigkeit in den Ringraum 122 des zweiten Hydraulikzylinders zufließt.

Auch wenn die Erfindung lediglich anhand einzelner Ausführungsbeispiele beschrieben wurde, erschließen sich für den Fachmann im Lichte der vorstehenden Beschreibung sowie der Zeichnung viele verschiedenantige Alternativen, Modifikationen und Varianten, die in den Schützbereich der Patentansprüche fallen.

## Patentansprüche

1. Geräteschnittstelle zur Kopplung von Arbeitsgeräten an ein Arbeitsfahrzeug bei der wenigstens zwei Hydraulikzylinder (30, 32) vorgesehen sind, durch die sich die relative Lage zwischen dem Arbeitsgerät und dem Arbeitsfahrzeug einstellen lässt, wobei die beiden Hydraulikzylinder (30, 32, 76, 82) mit wenigstens einem Zahnradstromteiler (42, 44, 110) derart in Verbindung stehen, dass ein Gleichlauf der Hydraulikzylinder (30, 32, 76, 82) ohne zusätzlichen Energieaufwand unter der Wirkung äußerer Kräfte erfolgt, **dadurch gekennzeichnet, dass** sechs nach Art eines Hexapoden angeordnete Hydraulikzylinder (74, 76, 78, 80, 82, 84) vorgesehen sind und dass wenigstens zwei der Hydraulikzylinder (76, 82) mit wenigstens einem Zahnradstromteiler (42, 44, 110) in Verbindung stehen.

2. Geräteschnittstelle nach Anspruch 1, **dadurch gekennzeichnet, dass** die Hydraulikzylinder (30, 32, 76, 82) als doppeltwirkende Hydraulikzylinder ausgelegt sind und dass mit jedem der beiden kolbenseitigen Räumen (124, 126) und mit jedem der beiden ringseitigen Räumen (120, 122) der Hydraulikzylinder (30, 32, 76, 82) ein Rotor (50, 54, 56, 60, 112, 114, 116, 118) des wenigstens einen Zahnradstromteilers (42, 44, 110) in Verbindung steht.

3. Geräteschnittstelle nach Anspruch 1 oder 2, **dadurch gekennzeichnet, dass** der Zahnradstromteiler (42, 44, 110) wenigstens zwei auf einer gemeinsamen Welle (52, 58, 128) angeordnete Rotoren (54, 60, 116, 118) enthält, die jeweils einerseits mit dem Kolbenraum (124, 126) eines der beiden Hydraulikzylinder (30, 32, 76, 82) und andererseits mit einem Vorratsbehälter (62) in Verbindung stehen.

4. Geräteschnittstelle nach einem der Ansprüche 1 bis 3, **dadurch gekennzeichnet, dass** der Zahnradstromteiler (42, 44, 110) wenigstens zwei auf einer gemeinsamen Welle (52, 58, 128) angeordnete Rotoren (50, 56, 112, 114) enthält, die jeweils einerseits mit dem Ringraum (120, 122) eines der beiden Hydraulikzylinder (30, 32, 76, 82) und andererseits mit einem Vorratsbehälter (62) in Verbindung stehen.

5. Geräteschnittstelle nach einem der Ansprüche 1 bis 4, **dadurch gekennzeichnet, dass** der Zahnradstromteiler (110) wenigstens vier auf einer gemeinsamen Welle (128) angeordnete Rotoren (112, 114, 116, 118) enthält, von denen zwei Rotoren (116, 118) mit einem größeren Schluckvolumen jeweils mit dem Kolbenraum (124, 126) eines der beiden Hydraulikzylinder (30, 32, 76, 82) und zwei Rotoren (112, 114) mit einem kleineren Schluckvolumen jeweils mit dem Ringraum (120, 122) eines der beiden Hydraulikzylinder (30, 32, 76, 82) in Verbindung stehen, und dass alle Rotoren (112, 114, 116, 118) andererseits mit einem Vorratsbehälter (62) in Verbindung stehen.

6. Geräteschnittstelle nach einem der Ansprüche 1 bis 5, **dadurch gekennzeichnet, dass** der Zahnradstromteiler (42, 44, 110) wenigstens zwei auf einer gemeinsamen Welle (52, 58, 128) angeordnete Rotoren (50, 54, 56, 60, 112, 114, 116, 118) enthält, von denen ein erster Rotor (54, 60, 116, 118) mit dem Kolbenraum (124, 126) eines ersten Hydraulikzylinders (30, 32, 76, 82) und ein zweiter Rotor (50, 56, 112, 114) mit dem Ringraum (120, 122) eines zweiten Hydraulikzylinders (30, 32, 76, 82) und beide Rotoren andererseits mit einem Vorratsbehälter (62) in Verbindung stehen.

7. Geräteschnittstelle nach einem der Ansprüche 1 bis 6, **dadurch gekennzeichnet, dass** zwei Zahnradstromteiler (42, 44) vorgesehen sind, wobei ein erster Zahnradstromteiler (42) zwei auf einer gemeinsamen Welle (52) angeordnete Rotoren (50, 54) enthält, von denen ein erster Rotor (54) mit dem Kolbenraum eines ersten Hydraulikzylinders (30) und ein zweiter Rotor (50) mit dem Ringraum eines zweiten Hydraulikzylinders (32) in Verbindung steht und wobei ein zweiter Zahnradstromteiler (44) ebenfalls zwei auf einer gemeinsamen Welle (58) angeordnete Rotoren (56, 60) enthält, von denen ein erster Rotor (56) mit dem Ringraum des ersten Hydraulikzylinders (30) und ein zweiter Rotor (60) mit dem Kolbenraum des zweiten Hydraulikzylinders (32) in Verbindung steht und wobei alle Rotoren (50, 54, 56, 60) andererseits mit einem Vorratsbehälter (62) in Verbindung stehen.

8. Geräteschnittstelle nach einem der Ansprüche 1 bis 7, **dadurch gekennzeichnet, dass** die Schluckvolumen der Rotoren (50, 54, 56, 60, 112, 114, 116, 118) auf den jeweils zugehörigen Hydraulikzylinderraum (120, 122, 124, 126) abgestimmt sind.

9. Geräteschnittstelle nach einem der Ansprüche 1 bis 8, **dadurch gekennzeichnet, dass** der Zahnradstromteiler (42, 44, 110) Rückschlagventile (90, 92, 94, 96) enthält, die einen Flüssigkeitsrückfluss vom Vorratsbehälter (62) zu den Hydraulikzylindern (30, 32, 76, 82) ermöglichen, sofern der Druck in einen Hydraulikzylinderraum (120, 122, 124, 126) unter einen vorgebbaren Druck fällt.

10. Geräteschnittstelle nach einem der Ansprüche 1 bis 9, **dadurch gekennzeichnet, dass** die beiden Hydraulikzylinder (30, 32) als Hubzylinder für jeweils einen Unterlenker (10, 12) einer Dreipunkt-Anbauvorrichtung ausgebildet sind.

11. Geräteschnittstelle nach einem der Ansprüche 1 bis 10, **dadurch gekennzeichnet, dass** die kolbenseitigen und/oder ringseitigen Räume (120, 122, 124, 126) der Hydraulikzylinder (30, 32, 76, 82) über eine Ventilanordnung (102, 104) mit einer Druckquelle (106) in Verbindung stehen.

## Claims

1. An implement interface for coupling implements to a working vehicle, in which at least two hydraulic cylinders (30, 32) are provided, through which the relative position between the implement and the working vehicle can be adjusted, wherein the two hydraulic cylinders (30, 32, 76, 82) are so coupled to at least one gearwheel flow divider (42, 44, 110) that synchronism of the hydraulic cylinders (30, 32, 76, 82) is effected under the influence of external forces, without additional expenditure of power, **characterized in that** six hydraulic cylinders (74, 76, 78, 80, 82, 84) are provided, arranged in the manner of a hexapod, and **in that** at least two of the hydraulic cylinders (76, 82) are coupled to at least one gearwheel flow divider (42, 44, 110).

2. An implement interface according to claim 1, **characterized in that** the hydraulic cylinders (30, 32, 76, 82) are formed as double acting hydraulic cylinders and **in that** a rotor (50, 54, 56, 60, 112, 114, 116, 118) of the at least one gearwheel flow divider (42, 44, 110) is coupled to each of the two piston end chambers (124, 126) and to each of the two rod end chambers (120, 122) of the hydraulic cylinders (30, 32, 76, 82).

3. An implement interface according to claim 1 or 2, **characterized in that** the gearwheel flow divider (42, 44, 110) includes at least two rotors (54, 60, 116, 118) arranged on a common shaft (52, 58, 128), each being coupled on one side to the piston chamber (124, 126) of one of the two hydraulic cylinders (30, 32, 76, 82) and on the other side to a reservoir (62).

4. An implement interface according to any of claims 1 to 3, **characterized in that** the gearwheel flow divider (42, 44, 110) includes at least two rotors (50, 56, 112, 114) arranged on a common shaft (52, 58, 128), each being coupled on one side to the rod chamber (120, 122) of one of the two hydraulic cylinders (30, 32, 76, 82) and on the other side to a reservoir (62).

5. An implement interface according to any of claims 1 to 4, **characterized in that** the gearwheel flow divider (110) includes at least four rotors (112, 114, 116, 118) arranged on a common shaft (128), of which two rotors (116, 118) with a greater intake volume are each coupled to the piston chamber (124, 126) of one of the two hydraulic cylinders (30, 32, 76, 82) and two rotors (112, 114) with a smaller intake volume are each coupled to the rod chamber (120, 122) of one of the two hydraulic cylinders (30, 32, 76, 82), and **in that** all rotors (112, 114, 116, 118) are coupled on the other side to a reservoir (62).

6. An implement interface according to any of claims 1 to 5, **characterized in that** the gearwheel flow divider (42, 44, 110) includes at least two rotors (50, 54, 56, 60, 112, 114, 116, 118) arranged on a common shaft (52, 58, 128), a first rotor (54, 60, 116, 118) being coupled to the piston chamber (124, 126) of a first hydraulic cylinder (30, 32, 76, 82) and a second rotor (50, 56, 112, 114) being coupled to the rod chamber (120, 122) of a second hydraulic cylinder (30, 32, 76, 82) and both rotors being coupled on the other side to a reservoir (62).

7. An implement interface according to any of claims 1 to 6, **characterized in that** two gearwheel flow dividers (42, 44) are provided, wherein a first gearwheel flow divider (42) includes two rotors (50, 54) arranged on a common shaft (52), of which a first rotor (54) is coupled to the piston chamber of a first hydraulic cylinder (30) and a second rotor (50) is coupled to the rod chamber of a second hydraulic cylinder (32) and wherein a second gearwheel flow divider (44) also includes two rotors (56, 60) arranged on a common shaft (58), of which a first rotor (56) is coupled to the rod chamber of the first hydraulic cylinder (30) and a second rotor (60) is coupled to the piston chamber of the second hydraulic cylinder (32) and wherein all rotors are coupled on the other side to a reservoir (62).

8. An implement interface according to any of claims 1 to 7, **characterized in that** the intake volumes of the rotors (50, 54, 56, 60, 112, 114, 116, 118) are matched to the respective associated hydraulic cylinder chambers (120, 122, 124, 126).

9. An implement interface according to any of claims 1 to 8, **characterized in that** the gearwheel flow divider (42, 44, 110) includes check valves (90, 92, 94, 96) which allow return fluid flow from the reservoir (62) to the hydraulic cylinders (30, 32, 76, 82) insofar as the pressure in a hydraulic cylinder chamber (120, 122, 124, 126) falls below a predetermined pressure.

10. An implement interface according to any of claims 1 to 9, **characterized in that** the two hydraulic cylinders (30, 32) are in the form of lift cylinders for respective lower links (10, 12) of a three point hitch.

11. An implement interface according to any of claims 1 to 10, **characterized in that** the piston end and/or rod end chambers (120, 122, 124, 126) of the hydraulic cylinders (30, 32, 76, 82) are coupled to a pressure source (106) through a valve arrangement (102, 104).

## Revendications

1. Interface technologique pour le couplage d'outils de travail à un véhicule de travail, dans laquelle il est prévu au deux vérins hydrauliques (30, 32) qui permettent de régler la position relative entre l'outil de travail et le véhicule de travail, les deux vérins hydrauliques (30, 32, 76, 82) étant reliés à au moins un diviseur de débit à roue dentée (42, 44, 110) de telle sorte qu'un déplacement dans le même sens des vérins hydrauliques (30, 32, 76, 82) ne nécessite pas d'application supplémentaire d'énergie moyennant l'action de forces extérieures, **caractérisée en ce qu'**il est prévu six vérins hydrauliques (74, 76, 78, 80, 82, 84) agencés sous forme d'hexapode et **en ce qu'**au moins deux des vérins hydrauliques (76, 82) sont reliés à au moins un diviseur de débit à roue dentée (42, 44, 110).

2. Interface technologique selon la revendication 1, **caractérisée en ce que** les vérins hydrauliques (30, 32, 76, 82) sont conçus sous forme de vérins hydrauliques à double effet et **en ce qu'**un rotor (50, 54, 56, 60, 112, 114, 116, 118) dudit au moins un diviseur de débit à roue dentée (42, 44, 110) est relié à chacune des deux chambres (124, 126) du côté piston et à chacune des deux chambres annulaires (120, 122) du côté tige de piston des vérins hydrauliques (30, 32, 76, 82).

3. Interface technologique selon la revendication 1 ou 2, **caractérisée en ce que** le diviseur de débit à roue dentée (42, 44, 110) comporte au moins deux rotors (54, 60, 116, 118), qui sont agencés sur un arbre (52, 58, 128) commun et qui sont reliés chacun, d'une part, à la chambre de piston (124, 126) de l'un des deux vérins hydrauliques (30, 32, 76, 82) et, d'autre part, à un réservoir (62).

4. Interface technologique selon l'une quelconque des revendications 1 à 3, **caractérisée en ce que** le diviseur de débit à roue dentée (42, 44, 110) comporte au moins deux rotors (50, 56, 112, 114), qui sont agencés sur un arbre (52, 58, 128) commun et qui sont reliés chacun, d'une part, à la chambre annulaire (120, 122) de l'un des deux vérins hydrauliques (30, 32, 76, 82) et, d'autre part, à un réservoir (62).

5. Interface technologique selon l'une quelconque des revendications 1 à 4, **caractérisée en ce que** le diviseur de débit à roue dentée (110) comporte au moins quatre rotors (112, 114, 116, 118), qui sont agencés sur un arbre (128) commun et parmi lesquels deux rotors (116, 118) avec un volume d'absorption plus élevé sont reliés chacun à la chambre de piston (124, 126) de l'un des deux vérins hydrauliques (30, 32, 76, 82) et deux rotors (112, 114) avec un volume d'absorption plus faible sont reliés chacun à la chambre annulaire (120, 122) de l'un des deux vérins hydrauliques (30, 32, 76, 82), et **en ce que** tous les rotors (112, 114, 116, 118) sont reliés, par ailleurs, à un réservoir (62).

6. Interface technologique selon l'une quelconque des revendications 1 à 5, **caractérisée en ce que** le diviseur de débit à roue dentée (42, 44, 110) comporte au moins deux rotors (50, 54, 56, 60, 112, 114, 116, 118), qui sont agencés sur un arbre (52, 58, 128) commun et parmi lesquels un premier rotor (54, 60, 116, 118) est relié à la chambre de piston (124, 126) d'un premier vérin hydraulique (30, 32, 76, 82) et un deuxième rotor (50, 56, 112, 114) est relié à la chambre annulaire (120, 122) d'un deuxième vérin hydraulique (30, 32, 76, 82), et les rotors deux rotors sont reliés, par ailleurs, à un réservoir (62).

7. Interface technologique selon l'une quelconque des revendications 1 à 6, **caractérisée en ce qu'**il est prévu deux diviseurs de débit à roue dentée (42, 44), un premier diviseur de débit à roue dentée (42) comportant deux rotors (50, 54), qui sont agencés sur un arbre (52) commun et parmi lesquels un premier rotor (54) est relié à la chambre de piston d'un premier vérin hydraulique (30) et un deuxième rotor (50) est relié à la chambre annulaire d'un deuxième vérin hydraulique (32), et un deuxième diviseur de débit à roue dentée (44) comportant également deux rotors (56, 60), qui sont agencés sur un arbre (58) commun et parmi lesquels un premier rotor (56) est relié à la chambre annulaire du premier vérin hydraulique (30) et un deuxième rotor (60) est relié à la chambre de piston du deuxième vérin hydraulique (32) et tous les rotors (50, 54, 56, 60) étant reliés, par ailleurs, à un réservoir (62).

8. Interface technologique selon l'une quelconque des revendications 1 à 7, **caractérisée en ce que** les volumes d'absorption des rotors (50, 54, 56, 60, 112, 114, 116, 118) sont ajustés respectivement à la chambre du vérin (120, 122, 124, 126) associée.

9. Interface technologique selon l'une quelconque des revendications 1 à 8, **caractérisée en ce que** le diviseur de débit à roue dentée (42, 44, 110) comporte des clapets anti-retour (90, 92, 94, 96), qui permettent un reflux du liquide depuis le réservoir (62) vers les vérins hydrauliques (30, 32, 76, 82) dans la mesure où la pression dans une chambre (120, 122, 124, 126) du vérin hydraulique chute en dessous d'une pression prédéfinissable.

10. Interface technologique selon l'une quelconque des revendications 1 à 9, **caractérisée en ce que** les deux vérins hydrauliques (30, 32) sont conçus sous forme de vérins de levage associés chacun à un bras inférieur (10, 12) d'un dispositif d'attelage à trois points.

11. Interface technologique selon l'une quelconque des revendications 1 à 10, **caractérisée en ce que** les chambres (120, 122, 124, 126) du côté piston et/ou du côté tige de piston des vérins hydrauliques (30, 32, 76, 82) sont reliées à une source de pression (106) par l'intermédiaire d'un système de vannes (102, 104).
